Europäisches Patentamt

European Patent Office

Office européen des brevets

(11) Veröffentlichungsnummer : **0 306 511 B1**

# (12) EUROPÄISCHE PATENTSCHRIFT

(45) Veröffentlichungstag der Patentschrift :
25.11.92 Patentblatt 92/48

(51) Int. Cl.⁵ : **C04B 11/024,** C04B 11/26

(21) Anmeldenummer : **88902408.9**

(22) Anmeldetag : **18.03.88**

(86) Internationale Anmeldenummer :
**PCT/DE88/00169**

(87) Internationale Veröffentlichungsnummer :
**WO 88/07502 06.10.88 Gazette 88/22**

(54) **VERFAHREN ZUR UMWANDLUNG VON CALCIUMSULFATDIHYDRAT IN -g(a)-HALBHYDRAT.**

(30) Priorität : **21.03.87 DE 3709393**

(43) Veröffentlichungstag der Anmeldung :
**15.03.89 Patentblatt 89/11**

(45) Bekanntmachung des Hinweises auf die
Patenterteilung :
**25.11.92 Patentblatt 92/48**

(84) Benannte Vertragsstaaten :
**DE FR GB IT**

(56) Entgegenhaltungen :
**DE-A- 2 310 799
DE-A-31 197 49
FR-A- 2 570 367
GB-A- 1 101 771
LU-A- 68 331**

(73) Patentinhaber : **BOLD, Jörg
Dürer Strasse 12
W-6750 Kaiserslautern (DE)**
Patentinhaber : **FINK, Frank
Bismarckstrasse 56
W-6600 Saarbrücken (DE)**
Patentinhaber : **UMLAUF, Jürgen
Kaiserstrasse 186
W-6600 Saarbrücken (DE)**

(72) Erfinder : **BOLD, Jörg
Dürer Strasse 12
W-6750 Kaiserslautern (DE)**
Erfinder : **FINK, Frank
Bismarckstrasse 56
W-6600 Saarbrücken (DE)**
Erfinder : **UMLAUF, Jürgen
Kaiserstrasse 186
W-6600 Saarbrücken (DE)**

## Beschreibung

Die Erfindung betrifft ein Verfahren zur Umwandlung von Calciumsulfatdihydrat aus Rauchgasentschwefelungsanlagen in abbindefähiges α-Halbhydrat in einer Salzlösung als Calciniermedium, wobei als Salzlösung chloridaltige Waschflüssigkeit aus der Rauchgasentschwefelungsanlage verwendet wird und wobei das erhaltene α-Halbhydrat gewaschen und getrocknet wird.

Bei der nassen Rauchgasreinigung unter Verwendung einer Calciumionen enthaltenden Waschflüssigkeit wird als Endprodukt ein wässriger Calciumsulfatbrei (Gipsbrei) erhalten, aus dem der Gips in Form von Dihydrat abgetrennt werden kann.

Mit Gips-Dihydrat wird zwar ein in Wasser schlecht lösliches Produkt erhalten, jedoch ergehen sich insbesondere bei Großfeuerungsanlagen wegen der großen anfallenden Gipsmenge erhebliche Deponieprobleme.

Zur wirtschaftlichen Verwertung vor Rauchgasentschwefelungsgips ist es bekannt, Gips-Dihydrat durch geeignete thermische Weiterbehandlung in eine abbindefähige Form, unter anderem in α-Halbhydrat, zu überführen, die, ggf. in Mischung mit geeigneten Zuschlagstoffen, die Verwendung vor Rauchgasentschwefelungsgips in der Bauindustrie oder auch im untertägigen Bergbau, beispielsweise zur Errichtung von Mauern und Dämmen oder zum Verfüllen von Hohlräumen, ermöglicht.

Zur Umkristallisation von Dihydrat in α-Halbhydrat ist es bekannt, gewaschenes, weitgehend von Chloriden gereinigtes Dihydrat einer hydrothermalen Behandlung entweder in Schwefelsäurelösung oder in Autoklaven unter Druck zu unterziehen.

Aus der DE-A- 31 19 749 ist es darüber hinaus bekannt, Dihydrat aus Rauchgasentschwefelungsanlagen ungewaschen, d.h. in Gegenwart chloridhaltiger Waschlösung - diese enthält ca. 3 Gew.-% Calciumchlorid - umzukristallisieren. Das so erhaltene α-Halbhydrat eignet sich insbesondere für den Einsatz im untertägigen Bergbau, da dort die durch den Chloridgehalt bedingten sog. Ausblühungen nicht stören. Vielmehr kommt es ausschließlich auf das Festigkeitsverhalten an, das gemäß DE-A-31 19 749 eher günstig beeinflußt wird.

Allerdings kann die Umwandlung von chloridhaltigem Dihydrat nicht mehr in einer Schwefelsäurelösung durchgeführt werden, da sich in Kontakt mit Chlorid Salzsäure bildet. Bei dem bekannten Verfahren wird die Umkristallisation dementsprechend in der üblichen Weise im Autoklaven unter Druck durchgeführt.

Die Umwandlung im Autoklaven unter Druck erfordert jedoch einen großen apparativem und auch energetischen Aufwand und ist somit sehr teuer. Zusätzlich erfordert diese Anlage einen relativ hohen Wartungsaufwand.

Aufgabe der vorliegenden Erfindung ist es, ein einfaches und wirtschaftliches Verfahren zur Umwandlung von Dihydrat aus Rauchgasentschwefelungsanlagen anzugeben.

Diese Aufgabe wird bei einem Verfahren der eingangs genannten Art erfindungsgemäß dadurch gelöst, daß als Calciniermedium aufkonzentrierte Waschflüssigkeit mit einem Calciumchloridgehalt von 10 bis 70 Gew.-% verwendet wird. Vorzugsweise beträgt der Calciumchloridgehalt 20 bis 40 Gew.-%. Die Umkristallisation erfolgt zweckmäßigerweise drucklos bei Temperaturen unterhalb des Siedepunktes.

Das Aufkonzentrieren der Waschflüssigkeit erfolgt vorzugsweise thermisch, wobei zumindest teilweise Wärmeenergie der Rauchgase genutzt werden kann.

Gegenüber Autoklavenverfahren weist das erfindungsgemäße Verfahren wesentliche Vorteile auf. Da es drucklos arbeitet, bedarf es eines geringen apparativen und energetischen Aufwandes und nicht zuletzt auch eines geringeren Wartungsaufwandes . Da zudem die bevorzugte Umwandlungstemperatur unter 100 °C liegt, besteht die Möglichkeit, geringerwertige Wärmeenergie, d.h. Abfallwärme einzusetzen.

Das nach dem erfindungsgemäßen Verfahren in aufkonzentrierter Waschlösung mit einem Calciumchloridgehalt von 20 bis 40 Gew.-% erhaltene α-Halbhydrat weist eine sehr kompakte Kristallstruktur, Säulen bzw. hexagonale Kuben, auf. Die Kristalltracht läßt sich durch dosierte Zugabe von geeigneten Substanzen, wie z.B. Succinat, Maleinsäure oder auch Sulfonate, gezielt beeinflussen. Über 90 % des entstehenden Halbhydrates weisen eine Kristallgröße zwischen 20 und 100 μm auf. Dieses relativ grobkörnige Produkt läßt sich staubarm verarbeiten und eignet sich daher insbesondere für den Einsatz im Bergbau. Durch Zugabe von Magnesiumchlorid oder Kaliumchlorid kann die Kristallbildung beschleunigt werden.

Erfolgt die Umkristallisation in aufkonzentrierter Waschflüssigkeit mit einem Calciumchloridgehalt über 45 Gew.-% und Temperaturen oberhalb 85 °C, so wird ein feinkörniges Halbhydrat mit Kristallgrößen < 10 μm erhalten, das sich wegen der Staubprobleme aber nicht für den Untertageeinsatz eignet. Da in diesem Bereich die Umkristallisation jedoch schneller anläuft, werden in diesem Bereich zweckmäßigerweise Kristallkeime erzeugt, die dem umzuwandelnden Dihydrat zugegeben werden. Diese Kristallkeime werden vorzugsweise in einem separaten Keimreaktor erzeugt, in den ggf. auch die Kristalltracht bzw. die Kristallbildung beschleunigende Substanzen gegeben werden können.

Kristallkeime können jedoch auch durch Rückführung von bereits umgewandeltem Gut zugegeben werden. Die Kristalltracht des erhaltenen α-Halbhydrates ist - neben der erwähnten Zugabe von geeigneten Substanzen - auch durch Menge, Größe und Form der zugegebenen Kristallkeime beeinflußbar. Die Menge der zugegebenen Kristallkeime liegt zweckmäßigerweise zwischen 5 bis 30 Gew.-% bezogen auf Dihydrat.

Wird die Umkristallisation in mehreren, in Reihe geschalteten Reaktionsabschnitten durchgeführt, so kann die Konzentration der die Kristalltracht beeinflussenden Substanzen in den einzelnen Reaktionsabschnitten, d.h. in der Keimbildungs- und der Wachstumsperiode der Kristalle, unterschiedlich gewählt werden.

Das erhaltene $\alpha$-Halbhydrat wird, zweckmäßigerweise in mehreren, im Gegenstrom geschalteten Stufen, mit Waschwasser aus der Rauchgasentschwefelungsanlage gewaschen, so daß im Gleichgewicht nur die Calciumchloridmenge, die mit dem ungewaschenen Dihydrat in den Prozeß eingeführt wird, mit dem umgewandelten Produkt wieder ausgeschleust wird und die Konzentration erhalten bleibt, d. h. kein Fremd-Calciumchlorid erforderlich wird. Das Waschwasser wird zweckmäßigerweise im indirekten Wärmetausch mit dem getrockneten Halbhydrat und-/oder den Brüden aus der Trocknungsanlage vorgewärmt.

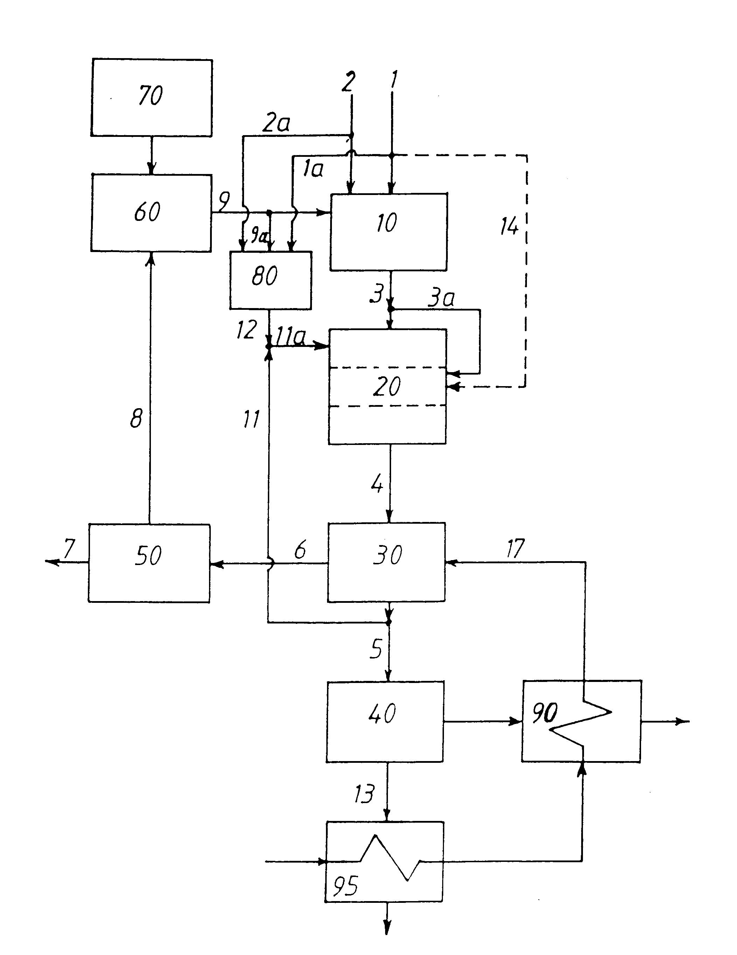

Das erfindungsgemäße Verfahren wird anhand des in der Figur beispielhaft dargestellten Verfahrensschemas weiter erläutert.

In einem Mischer 10 wird über Leitung 1 zugeführtes Dihydrat mit über Leitung 9 aus einem Zwischentank 60 zugeführter aukonzentrierter Wasclösung mit einem Calciumchloridanteil von ca. 20 bis 40 Gew.-% zu einer Suspension gemischt. Der Dihydratanteil. der Suspension ist wegen der mit dem Dihydratanteil steigenden Viskosität der Suspension auf ca. 20 Gew.-% beschränkt. Über Leitung 2 können der Suspension ggf. die Kristalltracht beeinflussende bzw. die Kristallbildung beschleunigende Substanzen zugegeben werden. Die Dihydratsuspension wird über Leitung 3 in einen Reaktor 20 gefördert und in diesem unter Zufuhr von Wärme zu $\alpha$-Halbhydrat umkristallisiert. Zur Beschleunigung des Umwandlungsprozesses werden in den Reaktor 20 über Leitung 11a Kristallkeime zugegeben, entweder in form von rückgeführtem umgewandeltem Gut, vorzugsweise aber in form eigens in einem Keimreaktor 80 gewonnener Kristallkeime. Der Anteil der zugegebenen Keime, bezogen auf das Dihydrat, liegt zwischen 5 bis 30 Gew.-%.

Vorteilhafterweise wird ein Teil der Dihydratsuspension aus Leitung 3 abgezweigt und über Leitung 3a in einem Bereich des Reaktors 20 eingeleitet, in dem bereits vermehrt Kristallkeime mit größerer Kristalloberfläche vorhanden sind. Es kann jedoch auch über Leitung 14 unmittelbar Dihydrat zugeführt werden, um den Feststoffanteil zu erhöhen. Das ist möglich, da das Volumen des gebildeten $\alpha$-Halbhydrates geringer ist und zudem die Kristallform kompakter und somit viskositätsvermindernd - als die des Dihydrates ist.

Das im Reaktor 20 gebildete $\alpha$-Halbhydrat wird über Leitung 4 abgezogen, in einer Filteranlage 30 gewaschen und entwässert und anschließend über Leitung 5 in einen Trockner 10 gefördert. Über Leitung 13 wird das getrocknete $\alpha$-Halbhydrat aus der Anlage abgezogen.

Nach der Filteranlage 30 kann ein Teil des umgewandelten Gutes abgetrennt und über Leitungen 11, 11a als Kristallkeime in den Reaktor 20 zurückgeführt werden.

Vorzugsweise werden jedoch die Kristallkeime im Keimreaktor 80 erzeugt. Dem Keimreaktor 80 werden über Leitung 1a Dihydrat, ggf. Zusätze über Leitung 2a und aufkonzentrierte Wasclösung über Leitungen 9, 9a zugeführt. Im Keimreaktor 80 wird zweckmäßigerweise mit einer Waschlösung mit einem Calciumchloridgehalt über 45 Gew.-% und bei Temperaturen oberhalb 85 °C gearbeitet, da bei diesen Bedingungen die Kristallbildung beschleunigt abläuft.

Zum Waschen des $\alpha$-Halbhydrates wird der Filteranlage 30 über Leitung 17 Waschlösung aus der Rauchgasentschwefelungsanlage zugeführt. Die Waschlösung wird zweckmäßigerweise in Wärmetauschern 95 und 90 im Wärmetausch mit getrocknetem $\alpha$-Halbhydrat und den Brüden aus dem Trockner vorgewärmt. Dabei geht das an der Kristalloberfläche des $\alpha$-Halbhydrates anhaftende Calciumchlorid in die Waschlösung über. Damit ist gewährleistet, daß mit dem umgewandelten Produkt nur der Calciumchloridanteil ausgeschleust wird, der mit dem ungewaschenen Dihydrat eingebracht wird, und somit weitgehend auf den Einsatz von anlagenfremdem Calciumchlorid verzichtet werden kann.

Die Waschlösung wird aus der Filteranlage über Leitung 6 abgezogen und in einem Konzentrationsgefäß 50, z.B. thermisch aufkonzentriert. Das anfallende, kondensierte Abwasser wird über Leitung 7 abgezogen. Die so aufkonzentrierte Waschlösung wird über Leitung 8 wieder in den Zwischentank 60 zurückgeführt. Ein Calciumchlorid enthaltender Tank 70 dient lediglich als Puffer zum Einstellen der Konzentration bzw. zum Ausgleich von Konzentrationsschwankungen der Waschlösung.

Das erfindungsgemäße Verfahren arbeitet besonders wirtschaftlich, wenn in der Rauchgasentschwefelungsanlage bereits eine Entsorgung des Calciumchlorides durch Aufkonzentrieren der Waschflüssigkeit vorgesehen ist. Dann kann nämlich unmittelbar an geeigneter Stelle Waschflüssigkeit mit jeweils der im Reaktor 20 bzw. der im Keimreaktor 80 benötigten Konzentration abgezweigt und die aus der Wasch- und Filteranlage 30 abfließende Waschflüssigkeit auch wieder unmittelbar in die Wasseraufbereitung der Rauchgasentschwefelungsanlage zurückgeführt werden.

## Patentansprüche

1. Verfahren zur Umwandlung von Calciumsulfatdihydrat aus Rauchgasentschwetelungsanlagen in abbindefähiges α-Halbhydrat in einer Salzlösung als Calciniermedium, wobei als Salzlösung chloridhaltige Waschflüssigkeit aus der Rauchgasentschwefelungsanlage verwendet wird und wobei das erhaltene α-Halbhydrat gewaschen und getrocknet wird, dadurch gekennzeichnet, daß als Calciniermedium aufkonzentrierte Waschflüssigkeit mit einem Calciumchloridgehalt von 10 bis 70 Gew.-% verwendet wird.

2. Verfahren ach Anspruch 1, dadurch gekennzeichnet, daß der Calciumchloridgehalt der aufkonzentrierten Waschflüssigkeit 20 bis 40 Gew.-% beträgt.

3. Verfahren nach Anspruch 1 oder 2, dadurch gekennzeichnet, daß die Umwandlung drucklos und bei Temperaturen unterhalb des Siedepunktes erfolgt.

4. Verfahren nach einem der Ansprüche 1 bis 3, dadurch gekennzeichnet, daß dem Calciumsulfatdihydrat Kristallkeime zugegeben werden.

5. Verfahren nach Anspruch 4, dadurch gekennzeichnet, daß die Kristallkeime durch Umwandlung von Calciumsulfatdihydrat in aufkonzentrierter Waschflüssigkeit mit einem Calciumchloridgehalt > 45 Gew.-% und bei Temperaturen >85 °C gewonnen werden.

6. Verfahren nach Anspruch 1 bis 5, dadurch gekennzeichnet, daß dem Calciumsulfatdihydrat die Kristalltracht beeinflussende Substanzen zugegeben werden.

7. Verfahren nach einem der Ansprüche 1 bis 6, dadurch gekennzeichnet, daß dem Calciumsulfatdihydrat die Kristallbildung beschleunigende Substanzen zugegeben werden.

8. Verfahren nach einem der Ansprüche 1 bis 7, dadurch gekennzeichnet, daß zum Waschen des α-Halbhydrates Waschflüssigkeit aus der Rauchgasentschwetelungsanlage verwendet wird.

9. Verfahren nach Anspruch 8, dadurch gekennzeichnet, daß die Waschflüssigkeit im indirekten Wärmetausch mit getrocknetem Halbhydrat und-/oder den Brüden aus der Trocknungsanlage vorgewärmt wird.

## Claims

1. Process for the conversion of calcium sulfate dihydrate from flue gas desulfurisation units into a bondable alpha-semihydrate in a salt solution used as calcination medium, in which the scrubbing liquid from the flue gas desulfurisation unit containing chloride is used as salt solution, and in which the produced alpha-semihydrate is washed and dried, characterized by using concentrated scrubbing liquid with a calcium chloride content of 10 to 70 % by weight as calcination medium.

2. Process according to claim 1, characterized by the fact that the calcium chloride content of the concentrated scrubbing liquid is 20 to 40 % by weight.

3. Process according to claim 1 or 2, characterized by the fact that the conversion takes place without pressure and at temperatures below the boiling point of the solution.

4. Process according to claim 1, 2 or 3, characterised by adding alpha-semihydrate seed cristals to the calcium sulfate dihydrate.

5. Process according to claim 4, characterized by obtaining the seed cristals by the conversion of calcium sulfate dihydrate in a concentrated scrubbing liquid with a calcium chloride content greater than 45 % by weight at temperatures higher than 85 °C.

6. Process according to claim 1 to 5, characterized by adding substances influencing the crystal habit to the calcium sulfate dihydrate.

7. Process according to one of the claims 1 to 6 , characterized by adding substances accelerating the crystal formation to the calcium sulfate dihydrate.

8. Process according to one of the claims 1 to 7, characterized by using the scrubbing liquid from the flue gas desulfurisation unit to wash the alpha-semihydrate.

9. Process according to claim 8, characterized by heating the scrubbing liquid used to wash the alpha-semihydrate in an indirect heat exchange with the dried alpha-semihydrate and /or the vapor from the drying unit.

**Revendications**

1. Procédé pour la conversion de sulfat de calcium dihydraté provenant des installations de désulfurisation des fumées en sulfat de calcium hémihydraté de forme alpha (α-hémihydrate). La conversion est executé dans une solution contenant des chlorides, en utilisant le liquide de lavage de la installation de desulfurisation qui contient des chlorides. Ensuite l'α-hémihydrate est lavé et sêché.

   Procedé caractérisé par le fait qu'on utilise comme médium de conversion le liquide de lavage qui a été concentré à une concentration en chloride de calcium de 10 à 70 % en poids .

2. Procédé selon revendication 1, caractérisé par le fait que la teneur de chloride de calcium du liquide concentré est 20 à 40% en poids.

3. Procédé selon les revendications 1 ou 2, caractérisé par le fait que la conversion se fait sans compression élévée et à des températures au-dessous du point d'éboullition.

4. Procédé selon les revendications 1 à 3, caractérisé par le fait qu'on ajoute au sulfate de calcium dihydraté des germes de cristallisation

5. Procédé selon les revendications 1 à 4, caractérisé par le fait que les germes der cristallisation sont fabriqués par la conversion de sulfate de calcium dihydraté dans un liquide concentré à un teneur en chloride de calcium de > 45 % en poids et à des températures > 85 °C.

6. Procédé selon les revendications 1 à 5, caractérisé par le fait qu'on ajoute au sulfate de calcium dihydraté des produits qui modifient l'habitus des cristaux.

7. Procédé selon les revendications 1 à 6, caractérisé par le fait qu'on ajoute au sulfate de calcium dihydraté des produits qui accelèrent la formation des cristaux.

8. Procédé selon les revendications 1 à 7, caractérisé par le fait qu'on utilise le liquide de lavage de l'installation de désulfurisation pour laver l' α-hémihydrate.

9. Procédé selon les revendications 1 à 8, caractérisé par le fait que le liquide de lavage est préchauffé par échange de chaleur indirect avec l' α-hemihydrate sêché et/ou avec les vapeurs de l'installation de sêchage.